# FASCICULE DE BREVET EUROPEEN

(11) **EP 3 992 401 B1**
(45) Date de publication et mention de la délivrance du brevet: **04.06.2025**
(21) Numéro de dépôt: 21205199.9
(22) Date de dépôt: 28.10.2021
(51) Int. Cl.: E04H 17/14, B23K 33/00

(54) **PROCÉDÉ D'ASSEMBLAGE D'UNE GRILLE BARREAUDÉE, GRILLE BARREAUDÉE ET CLÔTURE CORRESPONDANTES**
VERFAHREN ZUM ZUSAMMENBAU EINES SCHUTZGITTERS, ENTSPRECHENDES SCHUTZGITTER UND ENTSPRECHENDER ZAUN
METHOD FOR ASSEMBLING A RAILING, CORRESPONDING RAILING AND FENCE

(30) Priorité: 28.10.2020 FR 2011021
(43) Date de publication de la demande: 04.05.2022
(73) Titulaire: Picot, 53800 Congrier (FR)
(72) Inventeur: DESEUCHE, Geoffrey, 49420 Ombrée d'Anjou (FR)
(74) Mandataire: Vidon Brevets & Stratégie

(56) Documents cités:
- EP-A1- 2 725 171
- EP-A2- 2 299 036
- DE-U1- 202009 003 602
- GB-A- 2 263 423
- US-B1- 6 969 051

## Description

### 1. Domaine de l'invention

Le domaine de l'invention est celui de la conception et de la fabrication de clôtures, et plus précisément de grilles barreaudées.

L'invention concerne plus particulièrement la solidarisation de lisses de grilles barreaudées aux barreaux de ces grilles.

### 2. Art antérieur

Une grille barreaudée est généralement constituée de barreaux sensiblement verticaux et de barreaux sensiblement horizontaux également appelés "lisses". Les barreaux verticaux sont disposés à une certaine distance les uns des autres et les lisses, généralement au nombre de deux, mais parfois plus, sont disposées transversalement par rapport aux barreaux verticaux.

Pour fabriquer de telles grilles barreaudées, il est connu de mettre en œuvre un procédé consistant à fixer par soudure les barreaux et les lisses, les barreaux étant disposés en applique sur les lisses.

Cette fixation des barreaux et des lisses nécessite une opération préalable de positionnement des barreaux par rapport aux lisses qui s'effectue, de manière classique, à l'aide de gabarits permettant de régler avec précision l'espace entre les barreaux et d'uniformiser les grilles barreaudées réalisées.

Toutefois, les coûts engendrés par la mise en œuvre de gabarits, utilisables pour un dimensionnement donné d'une grille, sont relativement importants ce qui n'est pas satisfaisant. Par ailleurs, l'utilisation de gabarits rend impossible la réalisation de grilles personnalisées ou sur-mesure.

Une fois la grille assemblée, il est connu de traiter une telle grille en la recouvrant, par exemple de peinture. Certaines peintures sont appliquées en trop grandes quantités, ne sont pas de qualité suffisante, et risquent donc de craqueler. Elles ne peuvent dès lors plus remplir leur rôle de couche protectrice en plus de diminuer l'esthétique de la grille. La peinture engendre en outre des disparités dans la qualité des grilles assemblées.

Il est donc connu de les traiter par un bain de galvanisation. La galvanisation est un procédé qui consiste à recouvrir une grille d'une couche de zinc ayant pour propriété d'être résistant à la corrosion.

Toutefois, un inconvénient d'un tel procédé est que les grilles faisant l'objet d'un tel traitement de galvanisation peuvent quand même présenter dans le temps des traces de corrosion, notamment dans les zones de soudure et de contact des barreaux avec les lisses.

On connaît une autre méthode de fabrication consistant à encastrer des barreaux creux dans des encoches ménagées dans des lisses, les barreaux étant ensuite fixés sur les lisses par le biais d'une tige de blocage qui traverse la portion de barreau encastrée dans la lisse.

Toutefois, un tel mode de fabrication présente de nombreux inconvénients. Tout d'abord, l'encastrement des barreaux dans les lisses doit être effectué au plus juste de sorte que l'espace résiduel dans l'encoche entre la lisse et le barreau correspondant soit minime. Cela engendre une complexité de réalisation, ce qui n'est pas satisfaisant. En outre, une telle méthode de fabrication est adaptée aux barreaux creux et difficile à mettre en œuvre pour des barreaux pleins. La solidité des grilles fabriquées selon ce procédé est donc réduite.

Il existe donc un besoin d'améliorer l'existant dans le cadre de la fabrication de ces grilles barreaudées.

L'invention a notamment pour objectif de pallier au moins en partie certains de ces inconvénients de l'art antérieur. Une grille selon l'état de la technique suivant est divulguée dans EP2725171A1, EP2299036A2, US6969051B1, GB2263423A et DE202009003602U1.

### 3. Exposé de l'invention

L'invention répond à ce besoin en proposant un procédé de fabrication d'une grille barreaudée à partir d'au moins deux lisses et d'une pluralité de barreaux, comprenant les étapes successives suivantes :
- formation d'encoches dans lesdites au moins deux lisses ou lesdits barreaux ;
- positionnement desdits barreaux sur lesdites lisses à l'endroit desdites encoches ;
- soudage desdits barreaux auxdites lisses de sorte à former ladite grille barreaudée , et
- plastification de ladite grille barreaudée avec un revêtement plastique de sorte à recouvrir les lisses et les barreaux et à combler les espaces résiduels entre lesdits barreaux et lesdites lisses au niveau desdites encoches.

Ainsi, l'invention propose une approche nouvelle et inventive permettant de résoudre au moins en partie certains des inconvénients de l'art antérieur.

Notamment, l'étape de plastification permet d'obtenir une grille avec une bonne qualité de finition et renforce le lien entre les barreaux et les lisses. La durabilité d'une telle grille revêtue d'une plastification est améliorée (résistance à la corrosion accrue) et son esthétique est accrue.

Le procédé de l'invention permet de limiter les coûts de fabrication en réduisant, voire supprimant le recours à des gabarits. En effet, du fait que les lisses ou les barreaux peuvent faire office de gabarits par le biais de leurs encoches, le procédé de fabrication ne requiert dont plus que des gabarits très simples, voire préférentiellement aucun gabarit. Cela peut représenter un gain non négligeable en termes d'économie d'outillage et également un gain de temps du fait qu'on s'affranchit de l'étape de positionnement du gabarit au préalable.

Cela permet en outre, en s'affranchissant de l'utilisation d'un gabarit, de rendre possible le sur-mesure et donc en répondant aux mieux aux besoin d'un client.

Enfin, et du fait que les encoches sont formées directement dans les lisses ou les barreaux et que les barreaux sont positionnés sur les lisses à l'endroit des encoches, puis qu'il y a des étapes de soudage et de plastification, on supprime le besoin de mettre en œuvre des moyens supplémentaires de maintien entre les lisses et les barreaux.

Une telle grille est notamment adaptée aux sites sensibles.

Selon un aspect d'au moins un mode de réalisation du procédé de fabrication d'une grille barreaudée, celui-ci comprend une étape préalable de zingage des au moins deux lisses et/ou de la pluralité de barreaux.

Selon un aspect d'au moins un mode de réalisation, l'étape de formation des encoches dans les au moins deux lisses et/ou la pluralité de barreaux s'effectue par découpage laser dit laser tube.

De cette manière, cela permet d'obtenir une précision et une uniformité des encoches sur tout le long de chacun des lisses et/ou des barreaux.

Selon un aspect d'au moins un mode de réalisation, l'étape de soudage se fait selon la technique de soudage Laser, MIG, MAG ou TIG.

Ainsi, cela permet de mettre en œuvre des techniques de soudage classiques.

Selon un aspect d'au moins un mode de réalisation, les encoches sont formées sur au moins une face des lisses, chaque encoche étant destinée à recevoir au moins une portion d'un barreau.

Selon une variante, les encoches sont formées sur au moins une face des lisses, chaque encoche étant destinée à recevoir la totalité d'un barreau.

Selon un aspect d'au moins un mode de réalisation de l'invention, deux encoches sont formées sur chacun des barreaux, chaque encoche étant destinée à recevoir au moins une portion d'une des lisses.

L'invention concerne également une grille barreaudée obtenue à partir du procédé de fabrication selon l'un des modes de réalisation précités, la grille barreaudée comprenant au moins deux lisses et une pluralité de barreaux, les lisses ou les barreaux présentant des encoches de réception des barreaux ou des lisses respectivement, les lisses et les barreaux étant soudés ensemble, l'ensemble étant recouvert par un revêtement plastique, les espaces résiduels entre les barreaux et les lisses au niveau des encoches étant comblés par le revêtement plastique.

Selon un aspect d'au moins un mode de réalisation de l'invention, les barreaux étant fixés aux lisses par soudage.

Selon un aspect d'au moins un mode de réalisation de l'invention, les deux lisses présentant des encoches de sorte que les barreaux viennent s'encastrer dans les lisses au niveau des encoches, l'espacement entre les encoches sur la longueur d'une même lisse étant irrégulier.

Selon un aspect d'au moins un mode de réalisation de l'invention, les encoches sont non traversantes et présentent une profondeur maximale correspondant à la moitié de l'épaisseur des lisses.

Selon un aspect d'au moins un mode de réalisation de l'invention, les barreaux pénètrent totalement dans les encoches des lisses de sorte à être affleurants avec la surface extérieure des lisses.

Selon une variante, les barreaux ne pénètrent que partiellement dans les encoches des lisses.

Selon un aspect d'au moins un mode de réalisation de l'invention, les barreaux présentent une forme appartenant au groupe comprenant :
- une forme ronde ;
- une forme ovale ;
- une forme triangulaire ;
- une forme rectangulaire, et
- une forme carrée.

De ce fait, cela permet de mettre en œuvre une pluralité de grilles différentes, voire même de permettre de faire du sur mesure.

Selon un aspect d'au moins un mode de réalisation de l'invention, la grille barreaudée présente une hauteur comprise entre 0,6m et 2,5m, et une longueur comprise entre 2m et 2,5m

De ce fait, cela permet également de mettre en œuvre une pluralité de grilles différentes selon les besoins d'un utilisateur, et de permettre de faire du sur mesure.

Selon un aspect d'au moins un mode de réalisation de l'invention, au moins certains des barreaux ne s'étendent pas orthogonalement aux lisses.

Selon un aspect d'au moins un mode de réalisation de l'invention, les barreaux sont positionnés des deux côtés des lisses.

L'invention concerne également une clôture comprenant au moins une grille barreaudée selon l'un des modes de réalisation précités, la grille barreaudée étant fixée à ses extrémités à un poteau vertical.

### 4. Exposé de l'invention

D'autres caractéristiques avantageuses de l'invention apparaîtront plus clairement à la lecture de la description suivante d'un mode de réalisation préférentiel de l'invention, donné à titre de simple exemple illustratif et non limitatif et des dessins annexés parmi lesquels :
[Fig 1] est une vue de dessus en coupe d'une grille barreaudée selon un premier mode de réalisation de l'invention ;
[Fig 2] est une vue de dessus en coupe d'une lisse selon le premier mode de réalisation de l'invention ;
[Fig 3] est une vue en perspective éclatée d'une grille barreaudée selon le premier mode de réalisation de l'invention ;
[Fig 4] est une vue en perspective d'une grille barreaudée selon le premier mode de réalisation de l'invention ;
[Fig 5] est une vue de dessus en coupe d'une grille barreaudée selon un deuxième mode de réalisation de l'invention ;
[Fig 6] est une vue de dessus en coupe d'une lisse selon le deuxième mode de réalisation de l'invention ;
[Fig 7] est une vue en perspective éclatée d'une grille barreaudée selon le deuxième mode de réalisation de l'invention ;
[Fig 8] est une vue en perspective d'une grille barreaudée selon le deuxième mode de réalisation de l'invention ;
[Fig 9] est une vue en perspective éclatée d'une grille barreaudée selon un troisième mode de réalisation de l'invention, et
[Fig 10] est une vue en perspective d'une grille barreaudée selon le troisième mode de réalisation de l'invention.

### 5. Description d'un mode de réalisation

Le principe général de l'invention repose sur la mise en œuvre d'un procédé de fabrication d'une grille barreaudée qui permet l'obtention d'une grille de résistance (notamment à la corrosion et aux intrusions), et donc de durabilité, accrues et dont l'esthétique est améliorée.

Ceci est notamment rendu possible par la mise en œuvre d'une étape de plastification. Il est à noter que la plastification est un traitement industriel qui permet de recouvrir une grille barreaudée d'un revêtement plastique très résistant, la protégeant ainsi de la corrosion et améliorant l'esthétique et le rendu.

Un autre avantage de la technique proposée est qu'elle permet la fabrication de grilles personnalisées, sur-mesure.

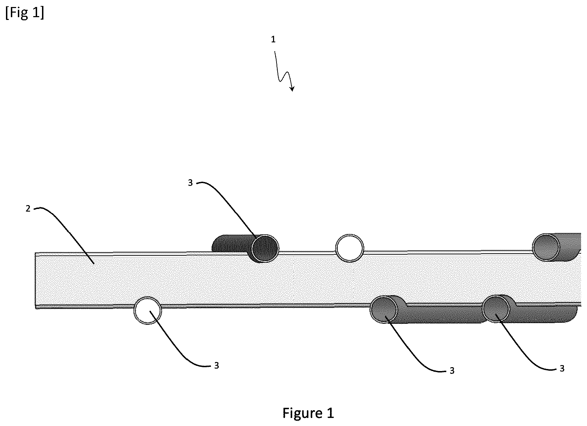

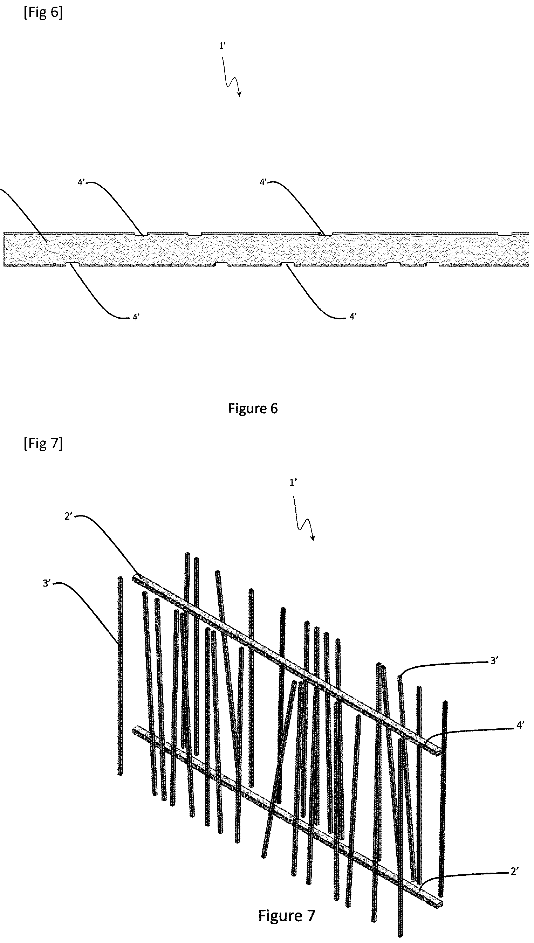

On présente maintenant, en relation avec les figures 1 à 10, trois modes de réalisation de l'invention.

Comme illustré sur ces figures, les grilles barreaudées comprennent une pluralité de lisses, ici deux, et une pluralité de barreaux. Selon les modes de réalisation, les lisses ou les barreaux sont en acier et présentent des encoches de réception des barreaux ou des lisses respectivement.

Selon des variantes, les lisses et/ou les barreaux peuvent également être en aluminium.

Ils peuvent également être dans un alliage composé de l'un de ces deux matériaux.

En outre, les lisses et les barreaux sont soudés entre eux puis sont recouverts par un revêtement plastique comblant les espaces résiduels entre les barreaux et les lisses au niveau des encoches.

Dans les modes de réalisation présentés ci-dessous qui sont donnés à titre d'exemples, la grille barreaudée présente une hauteur comprise entre 0,6m et 2,5m, et une longueur comprise entre 2m et 2,5m.

De telles dimensions permettent d'utiliser une telle grille barreaudée pour former des clôtures de sorte à sécuriser des bâtiments.

Ces clôtures comprennent une pluralité de grilles barreaudées qui peuvent être fixées à leurs extrémités latérales à un poteau vertical.

On présente maintenant, en relation avec les figures 1 à 4**,** un premier mode de réalisation de l'invention.

Comme illustré, la grille barreaudée 1 de ce mode de réalisation comprend deux lisses 2 et une pluralité de barreaux 3. Les deux lisses 2 sont ici sensiblement parallèles entre elles tandis que les barreaux 3 sont placés de manière non-parallèles entre eux, c'est-à-dire que les directions de ces barreaux 3 sont sécantes.

Ces barreaux 3 sont des tubes qui présentent ici chacun une section sensiblement circulaire.

Toutefois, selon des variantes, les barreaux pourraient présenter une forme appartenant au groupe comprenant :
- une forme ronde ;
- une forme ovale ;
- une forme triangulaire ;
- une forme rectangulaire, et
- une forme carrée.

Dans ce mode de réalisation, les lisses 2 présentent des encoches 4 de réception des barreaux. Ces encoches sont ici formées sur les deux faces de chacune des lisses 2, et sont dimensionnées pour recevoir une portion d'un barreau. De cette manière, les barreaux 3 viennent s'encastrer dans les lisses 2 au niveau de ces encoches 4. La grille barreaudée 1 présente donc des barreaux sur ses deux faces, les barreaux venant se positionner des deux côtés de chacune des deux lisses. Chaque barreau comprend donc deux portions venant s'encastrer dans une encoche de chacune des lisses de sorte que chaque barreau est fixé sur chacune des lisses.

Toutefois, on pourrait prévoir un mode de réalisation dans lequel une seule face des lisses porte des encoches.

La grille de l'invention se distingue donc de celles dans lesquelles les barreaux sont disposés en applique sur les lisses.

Ici, et comme plus particulièrement visible en figures 1 er 2, l'espacement entre les encoches 4 sur la longueur d'une même lisse est irrégulier.

En d'autres termes, les encoches ne sont pas espacées régulièrement deux à deux sur la longueur d'une même lisse.

De même, dans ce mode de réalisation, les deux lisses ne sont pas identiques en ce qui concerne la répartition des encoches. En d'autres termes, pour une grille barreaudée, les encoches d'une lisse donnée ne sont pas alignées verticalement avec les encoches de l'autre lisse.

De cette manière, au moins certains des barreaux 3 ne s'étendent pas orthogonalement aux lisses 2. Ainsi, et comme déjà décrit, les barreaux 3 sont placés de manière non-parallèles entre eux, c'est-à-dire que les axes longitudinaux de ces barreaux 3 sont sécants.

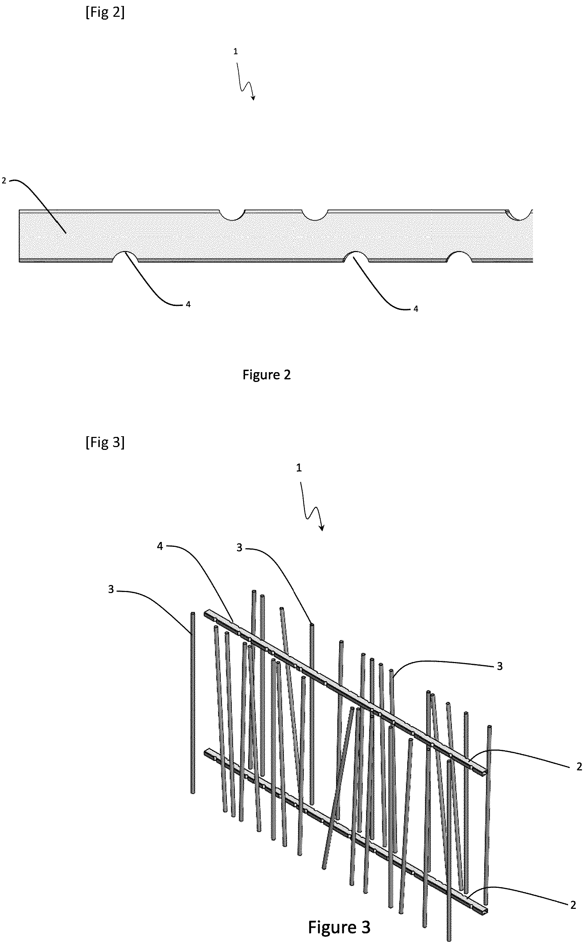

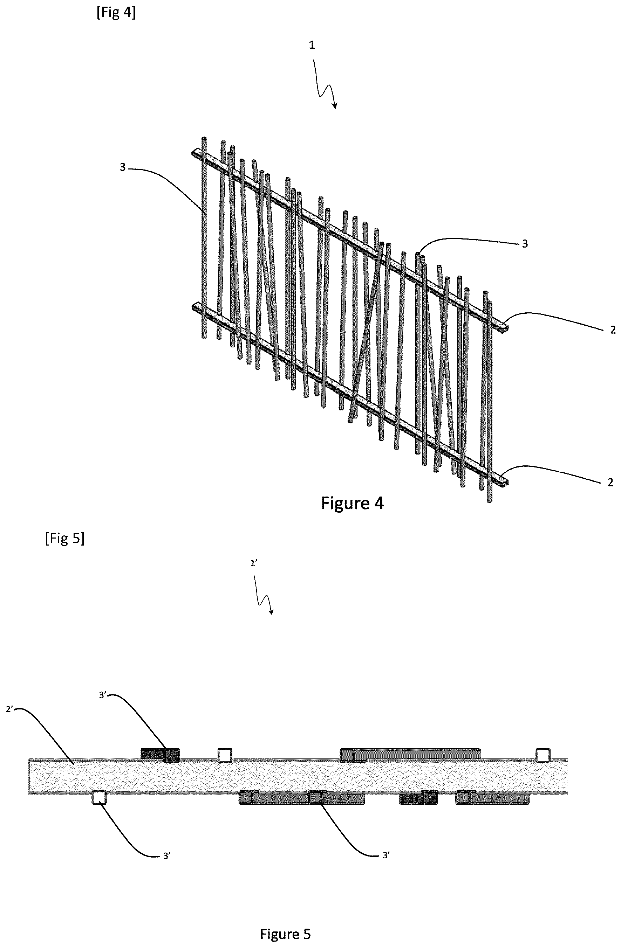

Comme illustré sur les figures 3 et **4****,** les barreaux sont également placés de façon non symétrique relativement aux barreaux de l'autre face de la lisse.

En d'autres termes encore, le placement des barreaux sur chacune des faces de la grille barreaudée est indépendant du placement sur l'autre face.

Cela permet d'accroître la solidité d'une telle grille barreaudée et d'optimiser la sécurisation d'une clôture composée de telles grilles en limitant l'espace disponible pour s'infiltrer à travers cette grille.

Cela permet également de proposer des grilles sur mesure avec des designs diversifiés et adaptés selon les utilisations.

Dans le mode de réalisation présenté sur ces figures 1 à 4**,** les barreaux 3 pénètrent dans les encoches 4 des lisses 2 de sorte à être affleurants avec la surface extérieure des lisses 2.

Il est à noter que selon une variante, les encoches qui sont non traversantes présentent une profondeur maximale correspondant à la moitié de l'épaisseur des barreaux.

Selon une autre variante, il serait possible de prévoir des encoches qui sont non traversantes ayant une profondeur maximale correspondant à la moitié de l'épaisseur des lisses.

On présente maintenant un mode de réalisation d'un procédé de fabrication de la grille barreaudée 1.

Ce procédé de fabrication comprend les étapes successives suivantes :
- formation des encoches 4 dans les deux lisses 2, ces encoches pouvant être formées sur une seule face ou les deux faces opposées des lisses ;
- positionnement des barreaux 3 sur les lisses 2 à l'endroit des encoches 4 ;
- soudage des barreaux 3 aux lisses 2 de sorte à fixer les barreaux aux lisses et à former la grille barreaudée 1, et
- plastification de la grille barreaudée 1 de sorte à recouvrir les lisses 2 et les barreaux 3 d'un revêtement plastique et à combler les espaces résiduels entre les barreaux 3 et les lisses 2 au niveau des encoches 4.

Cette étape de plastification permet d'obtenir une grille avec une bonne qualité de finition et renforce le lien entre les barreaux et les lisses.

Il est à noter que l'étape de plastification est effectuée par poudrage suivi d'une cuisson.

Cette étape pourrait également être réalisée par dépose d'une peinture liquide ou par poudrage par fluidisation.

Selon le monde de réalisation présenté, le procédé de fabrication comprend en outre une étape préalable de zingage des deux lisses 2 mais également des barreaux 3.

Selon une variante, l'étape préalable de zingage pourrait être faite uniquement sur les lisses ou sur les barreaux.

En ce qui concerne l'étape de formation des encoches 4 dans les deux lisses 2, elle s'effectue ici par découpage laser dit laser tube.

Une telle mise en œuvre permet en effet d'obtenir une meilleure précision de découpe et donc un meilleur encastrement des barreaux sur les lisses

Quant à l'étape de soudage, et selon les modes de réalisation, elle peut se faire selon la technique de soudage Laser, MIG (sous gaz inerte), MAG (sous gaz actif) ou TIG (gaz inerte à base de tungstène).

On présente maintenant, en relation avec les figures 5 à 8, un deuxième mode de réalisation de l'invention.

Comme illustré sur ces figures, et de même que pour le premier mode de réalisation, la grille barreaudée 1' de ce mode de réalisation comprend deux lisses 2' et une pluralité de barreaux 3'. Les deux lisses 2' sont ici également sensiblement parallèles entre elles tandis que les barreaux 3' sont placés de manière non-parallèles entre eux.

Il est à noter que, selon des variantes, il est possible de mettre en œuvre un nombre supérieur de lisses, par exemple trois lisses de sorte à solidifier davantage la structure de la grille barreaudée.

Ces barreaux 3' présentent ici une section sensiblement carrée.

Dans ce mode de réalisation également, les lisses 2' présentent des encoches 4' de réception des barreaux 3'. Ces encoches 4' sont formées sur les deux faces opposées de chacune des lisses 2' et sont dimensionnées pour recevoir chacune une portion d'un barreau 3'. De cette manière, les barreaux 3' viennent s'encastrer dans les lisses 2' au niveau de ces encoches 4'. La grille barreaudée 1' présente donc des barreaux sur ses deux faces, les barreaux 3' venant se positionner des deux côtés des deux lisses 2'.

Les encoches 4' présentent ici une forme carrée sensiblement complémentaire à la forme des barreaux 3'.

Le placement des barreaux 3' sur chacune des deux faces des lisses 2' n'est pas régulière.

Cela permet d'accroître la solidité d'une telle grille barreaudée et d'optimiser la sécurisation d'une clôture composée de telles grilles en limitant l'espace disponible pour s'infiltrer à travers cette grille.

Ici, et similairement au premier mode de réalisation, l'espacement entre les encoches 4' sur la longueur d'une même lisse 2' est irrégulier.

De même, dans ce mode de réalisation, les deux lisses 2' ne sont pas identiques en termes de répartition des encoches 4'. En d'autres termes, les encoches 4' d'une lisse 2' donnée ne sont pas alignées verticalement avec les encoches 4' de la deuxième lisse.

De cette manière, au moins certains des barreaux 3' ne s'étendent pas orthogonalement aux lisses 2'.

Dans le mode de réalisation présenté sur ces figures 5 à 8, les barreaux 3' pénètrent totalement dans les encoches 4' des lisses 2' de sorte à être affleurants avec la surface extérieure des lisses 2'.

Selon les modes de réalisation, les barreaux peuvent pénétrer partiellement voire totalement dans les encoches des lisses.

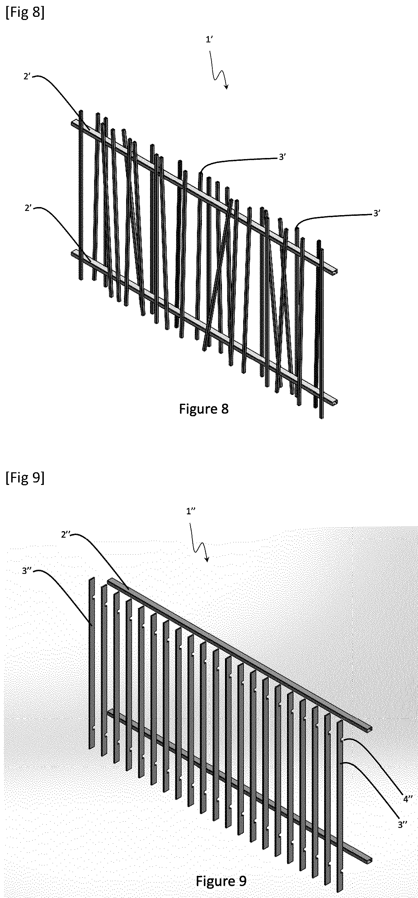

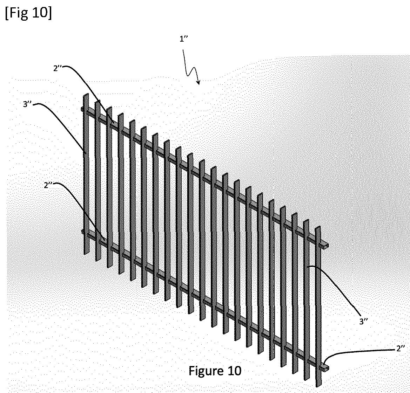

On présente maintenant, en relation avec les figures 9 et 10, un troisième mode de réalisation de l'invention.

Comme illustré, la grille barreaudée 1" de ce mode de réalisation comprend deux lisses 2" et une pluralité de barreaux 3". Les deux lisses 2" sont ici sensiblement parallèles entre elles de même que les barreaux 3" qui sont placés selon des directions sensiblement parallèles entre eux.

On pourrait toutefois prévoir une variante de ce mode de réalisation dans laquelle les barreaux et/ou les lisses ne sont pas parallèles entre eux.

Dans ce mode de réalisation, les barreaux 3" présentent des encoches 4" de réception des lisses 2". Ces encoches 4" sont formées sur une seule face de chacun des barreaux 3" et sont dimensionnées pour recevoir chacune une portion d'une lisse 2". De cette manière, ce sont les lisses 2" qui viennent s'encastrer dans les barreaux 3" au niveau de ces encoches 4". La grille barreaudée 1" une fois montée présente donc des barreaux sur une seule de ses deux faces.

Dans une variante de ce mode de réalisation, la grille barreaudée pourrait évidemment présenter des barreaux sur ses deux faces.

Ici, les encoches 4" présentent une section sensiblement rectangulaire de sorte à pouvoir accueillir la lisse 2" de section rectangulaire.

Dans le mode de réalisation présenté sur ces figures 9 et 10, les barreaux 3" ne pénètrent pas totalement dans les encoches 4" des barreaux 3"

Il est à noter que selon une variante, les encoches pourraient également être dimensionnées de sorte que les lisses puissent être logées intégralement dans les encoches et disposées affleurantes avec la surface extérieure des barreaux 3".

De même que pour les autres modes de réalisation, on pourrait prévoir des barreaux présentant une forme appartenant au groupe comprenant :
- une forme ronde ;
- une forme ovale ;
- une forme triangulaire ;
- une forme rectangulaire, et
- une forme carrée.

De la même façon, on pourrait prévoir des lisses présentant une forme appartenant au groupe comprenant :
- une forme ronde ;
- une forme ovale ;
- une forme triangulaire ;
- une forme rectangulaire, et
- une forme carrée.

Le procédé de fabrication d'une telle grille barreaudée varie par rapport au procédé de fabrication d'une grille barreaudée selon l'un des deux modes de réalisation précédemment présentés en ce que les encoches sont donc réalisées sur les barreaux et non plus sur les lisses.

Ce procédé de fabrication comprend donc les étapes successives suivantes :
- formation des encoches 4" dans les barreaux 3" ;
- positionnement des barreaux 3" sur les lisses 2" à l'endroit des encoches 4" ;
- soudage des barreaux 3" aux lisses 2" de sorte à fixer les barreaux aux lisses et à former la grille barreaudée 1", et
- plastification de la grille barreaudée 1" de sorte à recouvrir les lisses 2" et les barreaux 3" d'un revêtement plastique et à combler les espaces résiduels entre les barreaux 3" et les lisses 2" au niveau des encoches 4".

Selon le monde de réalisation présenté, le procédé de fabrication de la grille barreaudée 1" comprend en outre une étape préalable de zingage des deux lisses et des barreaux 3".

Selon une variante, l'étape préalable de zingage peut être faite uniquement sur les lisses 2" et/ou sur les barreaux 3".

En ce qui concerne l'étape de formation des encoches 4" dans les barreaux 3", elle s'effectue ici par découpage laser dit laser tube.

En ce qui concerne l'étape de soudage, et de manière analogue aux deux précédents modes de réalisation présentés, elle peut se faire selon la technique de soudage Laser, MIG (sous gaz inerte), MAG (sous gaz actif) ou TIG (gaz inerte à base de tungstène).

On note que les barreaux et les lisses peuvent être des profilés creux ou pleins.

## Revendications

1. Procédé de fabrication d'une grille barreaudée (1, 1', 1") à partir d'au moins deux lisses (2, 2', 2") et d'une pluralité de barreaux (3, 3', 3"), comprenant les étapes successives suivantes :
- formation d'encoches (4, 4', 4") dans lesdites au moins deux lisses (2, 2') ou lesdits barreaux (3") ;
- positionnement desdits barreaux (3, 3', 3") sur lesdites lisses (2, 2', 2") à l'endroit desdites encoches (4, 4', 4") ;
- soudage desdits barreaux (3, 3', 3") auxdites lisses (2, 2', 2") de sorte à former ladite grille barreaudée (1, 1', 1"), et
- plastification de ladite grille barreaudée (1, 1', 1") avec un revêtement plastique de sorte à recouvrir les lisses (2, 2', 2") et les barreaux (3, 3', 3") et à combler les espaces résiduels entre lesdits barreaux (3, 3', 3") et lesdites lisses (2, 2', 2") au niveau desdites encoches (4, 4', 4").

2. Procédé de fabrication d'une grille barreaudée selon la revendication 1, **caractérisé en ce qu'**il comprend une étape préalable de zingage desdits au moins deux lisses (2, 2', 2") et/ou de ladite pluralité de barreaux (3, 3', 3").

3. Procédé de fabrication d'une grille barreaudée selon l'une des revendications 1 ou 2, **caractérisé en ce que** l'étape de formation desdites encoches (4, 4', 4") dans lesdites au moins deux lisses (2, 2') et/ou ladite pluralité de barreaux (3") s'effectue par découpage laser dit laser tube.

4. Procédé de fabrication d'une grille barreaudée selon l'une des revendications 1 à 3, **caractérisé en ce que** l'étape de soudage se fait selon la technique de soudage Laser, MIG, MAG ou TIG.

5. Procédé de fabrication d'une grille barreaudée selon l'une des revendications 1 à 4, **caractérisé en ce que** les encoches (4, 4') sont formées sur au moins une face desdites lisses (2, 2'), chaque encoche (4, 4') étant destiné à recevoir au moins une portion d'un barreau (3, 3').

6. Procédé de fabrication d'une grille barreaudée selon l'une des revendications 1 à 4, **caractérisé en ce que** deux encoches (4") sont formées sur chacun desdits barreaux (3"), chaque encoche (4") étant destiné à recevoir une portion d'une desdites lisses (2").

7. Grille barreaudée (1, 1', 1") obtenue à partir du procédé de fabrication selon l'une des revendications 1 à 6, la grille barreaudée (1, 1', 1") comprenant au moins deux lisses (2, 2', 2") et une pluralité de barreaux (3, 3', 3"), lesdites lisses (2, 2', 2") ou lesdits barreaux (3, 3', 3") présentant des encoches (4, 4', 4") de réception desdits barreaux (3, 3', 3") ou desdites lisses (2, 2', 2") respectivement, les lisses (2, 2', 2") et les barreaux (3, 3', 3") étant soudés ensemble, ledit ensemble étant recouvert par un revêtement plastique, les espaces résiduels entre les barreaux (3, 3', 3") et les lisses (2, 2', 2") au niveau des encoches (4, 4', 4") étant comblés par le revêtement plastique.

8. Grille barreaudée (1, 1', 1") selon la revendication précédente, lesdits barreaux (3, 3', 3") étant fixés auxdites lisses (2, 2', 2") par soudage.

9. Grille barreaudée (1, 1') selon la revendication 7 ou 8, les deux lisses (2, 2') présentant des encoches (4, 4') de sorte que lesdits barreaux (3, 3') viennent s'encastrer dans les lisses (2, 2') au niveau desdites encoches (4, 4'), l'espacement entre lesdites encoches (4, 4') sur la longueur d'une même lisse (2, 2') étant irrégulier.

10. Grille barreaudée (1, 1') selon la revendication 9, lesdites encoches (4, 4') étant non traversantes et présentant une profondeur maximale correspondant à la moitié de l'épaisseur desdites lisses (2, 2').

11. Grille barreaudée (1, 1') selon l'une des revendications 9 ou 10, lesdits barreaux (3, 3') pénétrant totalement dans les encoches (4, 4') des lisses (2, 2') de sorte à être affleurants avec la surface extérieure des lisses (2, 2').

12. Grille barreaudée (1, 1', 1") selon l'une des revendications 7 à 11, lesdits barreaux présentant une forme appartenant au groupe comprenant :
- une forme ronde ;
- une forme ovale ;
- une forme triangulaire ;
- une forme rectangulaire, et
- une forme carrée.

13. Grille barreaudée (1, 1', 1") selon l'une des revendications 7 à 12, **caractérisée en ce qu'**elle présente une hauteur comprise entre 0,6m et 2,5m, et une longueur comprise entre 2m et 2,5m

14. Grille barreaudée (1, 1') selon l'une des revendications 7 à 13, **caractérisée en ce qu'**au moins certains desdits barreaux (3, 3') ne s'étendent pas orthogonalement aux lisses (2, 2').

15. Grille barreaudée (1, 1') selon l'une des revendications 7 à 14, **caractérisée en ce que** lesdits barreaux (3, 3') sont positionnés des deux côtés des lisses (2, 2').

16. Clôture comprenant au moins une grille barreaudée (1, 1', 1") selon l'une des revendications 7 à 15, ladite grille barreaudée (1, 1', 1") étant fixée à ses extrémités à un poteau vertical.

## Patentansprüche

1. Verfahren zur Herstellung eines Stabgitters (1, 1', 1") aus mindestens zwei Riegeln (2, 2', 2") und aus einer Vielzahl von Stäben (3, 3', 3"), umfassend die folgenden aufeinanderfolgenden Schritte:
- Bilden von Kerben (4,4', 4") in den mindestens zwei Riegeln (2, 2') oder den Stäben (3");
- Positionieren der Stäbe (3, 3', 3") an den Riegeln (2, 2', 2") an der Stelle der Kerben (4, 4', 4");
- Schweißen der Stäbe (3, 3', 3") an die Riegel (2, 2', 2"), so dass das Stabgitter (1, 1', 1") gebildet wird, und
- Kunststoffbeschichten des Stabgitters (1, 1', 1") mit einem Kunststoffüberzug, so dass die Riegel (2, 2', 2") und die Stäbe (3, 3', 3") überzogen werden und die verbliebenen Räume zwischen den Stäben (3, 3', 3") und den Riegeln (2, 2', 2") an den Kerben (4, 4', 4") aufgefüllt werden.

2. Verfahren zur Herstellung eines Stabgitters nach Anspruch 1, **dadurch gekennzeichnet, dass** es einen vorherigen Schritt des Verzinkens der mindestens zwei Riegel (2, 2', 2") und/oder der Vielzahl von Stäben (3, 3', 3") umfasst.

3. Verfahren zur Herstellung eines Stabgitters nach einem der Ansprüche 1 oder 2, **dadurch gekennzeichnet, dass** der Schritt des Bildens der Kerben (4, 4', 4") in den mindestens zwei Riegeln (2, 2') und/oder der Vielzahl von Stäben (3") durch Laserschneiden, Laserröhre genannt, erfolgt.

4. Verfahren zur Herstellung eines Stabgitters nach einem der Ansprüche 1 bis 3, **dadurch gekennzeichnet, dass** der Schritt des Schweißens nach der Technik des Laser-, MIG-, MAG- oder TIG-Schweißens erfolgt.

5. Verfahren zur Herstellung eines Stabgitters nach einem der Ansprüche 1 bis 4, **dadurch gekennzeichnet, dass** die Kerben (4, 4') auf mindestens einer Seite der Riegel (2, 2') gebildet werden, wobei jede Kerbe (4, 4') dazu bestimmt ist, mindestens einen Abschnitt eines Stabs (3, 3') aufzunehmen.

6. Verfahren zur Herstellung eines Stabgitters nach einem der Ansprüche 1 bis 4, **dadurch gekennzeichnet, dass** zwei Kerben (4") an jedem der Stäbe (3") gebildet werden, wobei jede Kerbe (4") dazu bestimmt ist, einen Abschnitt eines der Riegel (2") aufzunehmen.

7. Stabgitter (1, 1', 1"), das mit dem Herstellungsverfahren nach einem der Ansprüche 1 bis 6 erhalten wird, wobei das Stabgitter (1,1', 1") mindestens zwei Riegel (2, 2', 2") und eine Vielzahl von Stäben (3, 3', 3") umfasst, wobei die Riegel (2, 2', 2") oder die Stäbe (3, 3', 3") Kerben (4, 4', 4") zur Aufnahme der Stäbe (3, 3', 3") beziehungsweise der Riegel (2, 2', 2") aufweisen, wobei die Riegel (2, 2', 2") und die Stäbe (3, 3', 3") zusammengeschweißt sind, wobei die Anordnung mit einem Kunststoffüberzug überzogen ist, wobei die verbliebenen Räume zwischen den Stäben (3, 3', 3") und den Riegeln (2, 2', 2") an den Kerben (4, 4', 4") durch den Kunststoffüberzug aufgefüllt werden.

8. Stabgitter (1, 1', 1") nach dem vorhergehenden Anspruch, wobei die Stäbe (3, 3', 3") an den Riegeln (2, 2', 2") durch Schweißen befestigt sind.

9. Stabgitter (1, 1') nach Anspruch 7 oder 8, wobei die beiden Riegel (2, 2') Kerben (4, 4') aufweisen, so dass die Stäbe (3, 3') in die Riegel (2, 2') an den Kerben (4, 4') eingepasst werden, wobei der Abstand zwischen den Kerben (4, 4') über die Länge eines selben Riegels (2, 2') unregelmäßig ist.

10. Stabgitter (1, 1') nach Anspruch 9, wobei die Kerben (4, 4') nicht durchgängig sind und eine maximale Tiefe aufweisen, die der Hälfte der Dicke der Riegel (2, 2') entspricht.

11. Stabgitter (1, 1') nach einem der Ansprüche 9 oder 10, wobei die Stäbe (3, 3') vollständig in die Kerben (4, 4') der Riegel (2, 2') eindringen, so dass sie bündig mit der Außenoberfläche der Riegel (2, 2') sind.

12. Stabgitter (1, 1', 1") nach einem der Ansprüche 7 bis 11, wobei die Stäbe eine Form aufweisen, die zu der Gruppe gehört, welche umfasst:
- eine runde Form;
- eine ovale Form;
- eine dreieckige Form;
- eine rechteckige Form, und
- eine quadratische Form.

13. Stabgitter (1, 1', 1") nach einem der Ansprüche 7 bis 12, **dadurch gekennzeichnet, dass** es eine Höhe zwischen 0,6 m und 2,5 m und eine Länge zwischen 2 m und 2,5 m aufweist.

14. Stabgitter (1, 1') nach einem der Ansprüche 7 bis 13, **dadurch gekennzeichnet, dass** sich mindestens einige der Stäbe (3, 3') nicht orthogonal zu den Riegeln (2, 2') erstrecken.

15. Stabgitter (1, 1') nach einem der Ansprüche 7 bis 14, **dadurch gekennzeichnet, dass** die Stäbe (3, 3') auf beiden Seiten der Riegel (2, 2') positioniert sind.

16. Zaun, der mindestens ein Stabgitter (1, 1', 1") nach einem der Ansprüche 7 bis 15 umfasst, wobei das Stabgitter (1, 1', 1") an seinen Enden an einem vertikalen Pfosten befestigt ist.

## Claims

1. A method for manufacturing a bar grating panel (1, 1', 1') from at least two rails (2, 2', 2") and a plurality of bars (3, 3', 3"), comprising the following successive steps:
- forming notches (4, 4', 4") on the at least two rails (2, 2') or the bars (3");
- positioning the bars (3, 3', 3") on the rails (2, 2', 2") at the location of the notches (4, 4', 4");
- welding the bars (3, 3', 3") to the rails (2, 2', 2") so as to form the bar grating panel (1, 1', 1"), and
- laminating the bar grating panel (1, 1', 1") with a plastic coating so as to cover the rails (2, 2', 2") and the bars (3, 3', 3") and fill the residual spaces between the bars (3, 3', 3") and the rails (2, 2', 2") at the notches (4, 4', 4").

2. The method for manufacturing a bar grating panel according to claim 1, **characterized in that** it comprises a prior step of galvanizing the at least two rails (2, 2', 2") and/or the plurality of bars (3, 3', 3").

3. The method for manufacturing a bar grating panel according to one of claims 1 or 2, **characterized in that** the step of forming the notches (4, 4', 4") in the at least two rails (2, 2') and/or the plurality of bars (3") is carried out by a laser cutting known as tube laser cutting.

4. The method for manufacturing a bar grating panel according to one of claims 1 to 3, **characterized in that** the welding step is carried out using a laser, MIG, MAG or TIG welding technique.

5. The method for manufacturing a bar grating panel according to one of claims 1 to 4, **characterized in that** the notches (4, 4') are formed on at least one face of the rails (2, 2'), wherein each notch (4, 4') is intended to receive at least a portion of a bar (3, 3').

6. The method for manufacturing a bar grating panel according to one of claims 1 to 4, **characterized in that** two notches (4") are formed on each of the bars (3"), wherein each notch (4") is intended to receive a portion of one of the rails (2").

7. A bar grating panel (1, 1', 1") obtained using the manufacturing method according to one of claims 1 to 6, wherein the bar grating panel (1, 1', 1") comprises at least two rails (2, 2', 2") and a plurality of bars (3, 3', 3"), wherein the rails (2, 2', 2") or the bars (3, 3', 3") have notches (4, 4', 4") for receiving the bars (3, 3', 3") or the rails (2, 2', 2"), respectively, wherein the rails (2, 2', 2") and the bars (3, 3', 3") are welded together, wherein the resulting assembly is covered with a plastic coating, wherein the residual spaces between the bars (3, 3', 3") and the rails (2, 2', 2") at the notches (4, 4', 4") are filled by the plastic coating.

8. The bar grating panel (1, 1', 1") according to the preceding claim, wherein the bars (3, 3', 3") are fixed to the rails (2, 2', 2") by welding.

9. The bar grating panel (1, 1') according to claim 7 or 8, wherein the two rails (2, 2') have notches (4, 4') so that the bars (3, 3') fit into the rails (2, 2') at the notches (4, 4'), wherein the spacing between the notches (4, 4') over the length of a same rail (2, 2') is irregular.

10. The bar grating panel (1, 1') according to claim 9, wherein the notches (4, 4') are not through openings and have a maximum depth corresponding to half the thickness of the rails (2, 2').

11. The bar grating panel (1, 1') according to one of claims 9 or 10, wherein the bars (3, 3') completely enter the notches (4, 4') of the rails (2, 2') so as to be flush with the outer surface of the rails (2, 2').

12. The bar grating panel (1, 1', 1") according to one of claims 7 to 11, wherein the bars have a shape belonging to the group comprising:
- a round shape;
- an oval shape;
- a triangular shape;
- a rectangular shape, and
- a square shape.

13. The bar grating panel (1, 1', 1") according to one of claims 7 to 12, **characterized in that** it is between 0.6m and 2.5m high, and between 2m and 2.5m long.

14. The bar grating panel (1, 1') according to one of claims 7 to 13, **characterized in that** at least some of the bars (3, 3') do not extend orthogonally to the rails (2, 2').

15. The bar grating panel (1, 1') according to one of claims 7 to 14, **characterized in that** the bars (3, 3') are positioned on both sides of the rails (2, 2').

16. A fence comprising at least one bar grating panel (1, 1', 1") according to one of claims 7 to 15, wherein the bar grating panel (1, 1', 1") is fixed at its ends to a vertical post.
